# EUROPÄISCHE PATENTSCHRIFT

(11) **EP 2 317 862 B1**
(45) Veröffentlichungstag und Bekanntmachung des Hinweises auf die Patenterteilung: **23.12.2015**
(21) Anmeldenummer: 09775754.6
(22) Anmeldetag: 21.07.2009
(51) Int. Cl.: A22C 17/00

(54) **HÜLLE, GESTELL ZU IHRER AUFNAHME UND VERFAHREN ZUR HERSTELLUNG VON DÖNERARTIGEN FORMKÖRPERN**
CASING, SUPPORT FOR ITS RECEPTION AND PROCESS FOR THE MANUFACTURE OF DÖNER SHAPED BODIES
HOUSSE, SUPPORT POUR SA RÉCEPTION ET PROCÉDÉ POUR LA MANUFACTURE DE CORPS EN FORME DE DÖNER

(30) Priorität: 29.07.2008 CH 11892008; 22.12.2008 CH 20082008
(43) Veröffentlichungstag der Anmeldung: 11.05.2011
(73) Patentinhaber: Gewürz Berger Ag, 9487 Gamprin-Bendern (LI)
(72) Erfinder: DUBUISSON, Nils, FL-9490 Vaduz (LI)
(74) Vertreter: PATWIL AG
(86) Internationale Anmeldenummer: PCT/CH2009/000261
(87) Internationale Veröffentlichungsnummer: WO 2010/012115

(56) Entgegenhaltungen:
- WO-A2-2007/079322
- CH-A5- 594 359
- DE-A1- 10 314 321
- DE-A1-102004 037 218
- DE-A1-102006 002 795
- GB-A- 2 251 365
- US-A- 4 744 130

## Beschreibung

Die Erfindung bezieht sich auf eine Hülle nach dem Oberbegriff des Anspruches 1, auf ein Gestell zur Aufnahme der Hülle nach dem Oberbegriff des Anspruches 4, sowie auf ein Verfahren zur Herstellung und Konditionierung von Formkörpern aus Nahrungsmitteln nach dem Oberbegriff des Anspruches 11.

Bei der Herstellung von Döner bzw. Döner-Kebap wird im allgemeinen Fleisch entweder in Tranchen oder aus dem Fleischwolf auf einem Dorn, zweckmässig mit Standplatte, aufgespiesst und am Ende in die typische Döner-Form gebracht. Anschliessend wird das so in Form gebrachte Fleisch, sofern erforderlich, von abstehenden Fleischteilen befreit, d.h. diese werden abgeschnitten, um eine relativ glatte Aussenform zu erhalten, und schliesslich wird der so gebildete Nahrungsmittelkörper für die weitere Hantierung mit einer Folie, von oben mit 5 bis 6 Lagen bis unten - wegen des Nahrungsmitteldruckes von oben - mit 14 bis 15 Lagen umwickelt. Danach erfolgt eine intensive Tiefkühlung bis auf den Kern, insbesondere auf z.B. minus 18-24 Grad C.

Diese Arbeitsmethode hat einige Nachteile:
- sie erfordert viel teure Handarbeit für das Zuschneiden und sehr viel Kraft und Zeit für das Wickeln, insgesamt z.B. 35 bis 40 min für einen Döner von 20-30 kg;
- das Erreichen der typischen Döner-Form ist mehr oder weniger der "Kunst" des Wicklers überlassen;
- die Döner-Stücke sind nur schwer einheitlich zu gestalten, auch was Menge bzw. Gewicht betrifft;
- wegen der Isolierwirkung des bis zu 3 oder 4 mm dicken Folienpaketes nimmt die Tiefkühlung viel Zeit (je nach Masse etwa 3 Tage oder mehr) und daher teure Energie in Anspruch.

Weitere Verfahren sind auch aus Dokumenten wie z.B. GB 2 251 365 bekannt. Wenn in der folgenden Beschreibung von Döner die Rede ist, einer für in entsprechende Form gebrachtes Fleisch gebräuchliche Bezeichnung, dann sind im Sinne der Erfindung damit immer auch dönerartige Formkörper auch aus verschiedenen anderen Nahrungsmitteln, wie z.B. Fleischfarce, Fisch, Gemüse od.dgl. zu verstehen.

Der Erfindung liegt nun die Aufgabe zugrunde, die Herstellung und Konditionierung von Döner in einer Hülle zu erleichtern und preislich günstiger zu gestalten, und dies gelingt durch die kennzeichnenden Merkmale der unabhängigen Ansprüche 1, 4 und 11; weitere vorteilhafte Ausführungsformen der Erfindung sind in den Kennzeichen der abhängigen Ansprüche beschrieben.

Dadurch, dass nun abgepasste und vorgefertigte Hüllen bereitgestellt werden, die gleichzeitig eine Form für das einzufüllende Nahrungsmittel bilden und somit formgebend wirken, resultiert daraus eine Anzahl von Vorteilen:
- die Döner-Form ergibt sich von selbst und bedarf keiner besonderen Arbeitstätigkeit des Beschneidens und Wickelns;
- die Grösse und das Gewicht jedes einzelnen Döners sind damit weitgehend standardisierbar;

Diese Vorteile werden noch weiter ergänzt, wenn am offenen Ende mehrere Laschen von dem das Ende begrenzenden Rand der Hülle abstehen und um den Rand herum klappbar sind, um die Hülle nach dem Befüllen aus hygienischen Gründen schliessen und danach hochziehen zu können. Auch sollen damit die Nahrungsmittelstücke unter Druck gesetzt werden können, um die beim Einfüllen unvermeidlich eingeschlossene Luft herauszudrücken. Während der Befüllung sind die Laschen radial nach aussen weggeklappt und wenigstens zum Teil, z.B. mit Hilfe eines Spannringes, am oberen Rand eines Gestelles gehalten. Es kann z.B. von 8 Laschen jede zweite nicht mittels des Spannringes festgehalten werden; sondern es werden nach dem Befüllen zuerst vier freie Laschen (jeweils zwei einander kreuzweise gegenüberliegende Paare) umgeklappt und unter Ausübung von Druck auf die Füllmasse an einem zentralen Spiess eingehängt. Erst dann wird die Befestigung der Hülle gelöst, und die restlichen Laschen werden in analoger Weise umgeklappt und eingehängt. Soferne aber - wie später erläutert - die Hülle durch Dehnung auf einer unteren Scheibe aufsitzt, können auch alle Laschen festgehalten, bzw. nach der Befüllung einzeln umgeklappt werden.

Die Hülle besteht nach Anspruch 3 zweckmässigerweise aus dünnem, insbesondere luftdurchlässigem Material, z.B. aus einer auf der Innenseite mit Aluminium beschichteten - Pappe oder aus gelochtem bzw. porösem, dünnem Kunststoffmaterial. Bevorzugt ist allerdings Textilmaterial. Das Gewebe für die erfindungsgemässe Hülle 1 ist - angesichts der grossen Masse des Döners - relativ schwer ausgebildet. Es ist gegebenenfalls - insbesondere atmungsaktiv - beschichtet und besteht beispielsweise aus einem Polyamidgewebe, z.B. eines Flächengewichtes zwischen 100 g/m² und 180 g/m², zweckmässig etwa 140 g/m². Dadurch wird die nach dem Befüllen erfolgende Tiefkühlung des Nahrungsmitteles effizienter. Versuche ergaben eine Ersparnis von bis zu einem Drittel der bisher benötigten Zeit (bisher etwa 72 h für einen Döner von 20 kg), weil der Kälteübergang durch das dünne Material günstiger ist. Ausserdem erleichtert ein solches Hüllenmaterial das oben erwähnte Entweichen der in der Masse während des Befüllens immer eingeschlossenen Luft.

Damit der Döner die gewünschte Form erhält bzw.beibehält, wird im Sinne von Anspruch 4 ein kegelstumpfförmiger Korb, z.B. aus einem Sieb- oder Lochblechmaterial, aus Kunststoff oder Metall, vorgeschlagen, das beim Befüllen als Stütze für die erfindungsgemässe Hülle dient.

Weitere Einzelheiten der Erfindung ergeben sich an Hand der nachfolgenden Beschreibung beispielhafter Ausführungsformen. Es zeigen:
- Fig.1a: die Anordnung der erfindungsgemässen Hülle für das Befüllen, mit einem sie haltenden Korb, in explodierter Darstellung;
- Fig.1b: eine Draufsicht von oben auf die befüllte Hülle, mit dem ersten Schritt des Verschliessens mittels vier radial einwärts geklappter Laschen;
- Fig.2: eine erste Ausführungsform des erfindungsgemässen Gestelles;
- Fig.3a bzw. 3b: die erfindungsgemässe Hülle vor bzw. nach der Befüllung;
- Fig.3c: eine Detail aus den Fig.3a bzw. 3b
- Fig.4: eine zweite Ausführungsform des erfindungsgemässen Gestelles in Befüllstellung in einer Perspektivansicht schräg von unten;
- Fig.5: ein Gestell ähnlich der Fig.4, jedoch mit bügelförmigem Kipplager in Entladestellung des Korbes in einer Perspektivansicht von der Seite;
- Fig.6: eine leicht abgewandelte Ausführungsform der Fig.4 bzw. 5 mit Höhenverstellung, teilweise im Längsschnitt; und
- Fig.7: eine Variante der Ausbildung eines Korbes für eine andere Verfahrensweise beim Entladen.

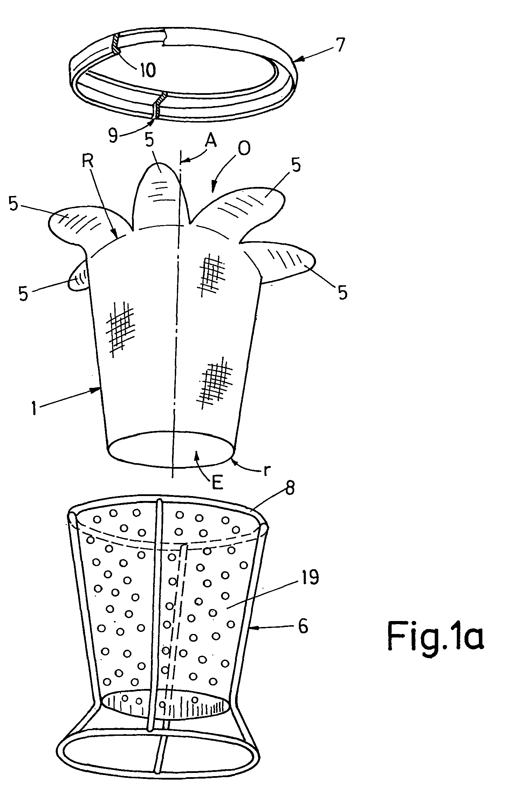

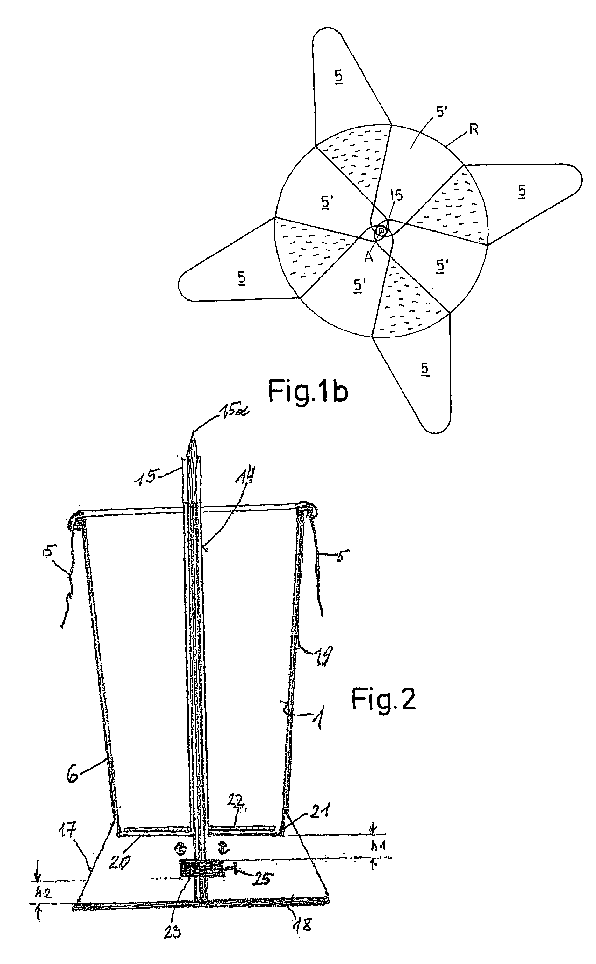

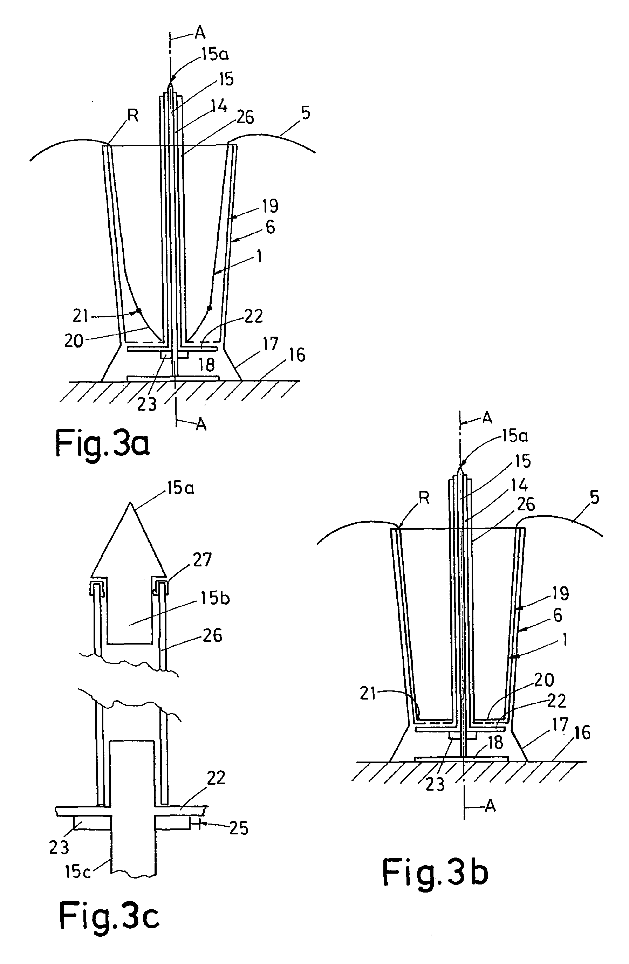

Die Hülle 1 und das Gestell 6 gemäss der Erfindung werden im Folgenden figurenübergreifend beschrieben. Beim Befüllen wird die Hülle 1 am radial oberen Rand R (Fig.1a bzw. 3a und b) offen gehalten, um das Nahrungsmittel einfüllen zu können. Dagegen kann das untere Ende mit einem Boden 20 (Fig.3a) verschlossen sein, der vorzugsweise aus demselben Textilmaterial besteht, z.B. mit dem unteren Öffnungsrand E der Hülle 1 vernäht ist. Er kann mit einer Durchstecköffnung für das Antriebsohr 14 versehen ist, soferne dieses nicht gemäss Fig.2 auf einer in der Hülle für den späteren Transport vorgesehenen Scheibe 22 aufsitzt.

Zweckmässigerweise werden die am offenen Ende O um den Rand R der Hülle 1 herum klappbaren Laschen 5 (Fig.1) einstückig mit der Hülle 1, d.h. aus demselben Material gebildet. Wenn mindestens vier, besser acht bis zwölf Laschen 5 - vorzugsweise in gleichem Winkelabstand bezüglich der Mittelachse voneinander beabstandet - vorgesehen sind, ergibt sich die Möglichkeit eines gleichmässigeren Druckaufbaus nach der Befüllung.

Nur um eine Vorstellung von den möglichen und bevorzugten Massen im Falle eines Döners von etwa 20 kg zu geben, sei nachstehend ein Beispiel der Abmessungen gegeben:

| | |
|---|---|
| Umfang am unteren Rand | 65 cm |
| Umfang am oberen Rand | 80 cm |
| Höhe der Hülle (entlang der Achse A) | 50 cm |
| radiale Länge der Laschen | 15 cm |
| Anzahl der Laschen | 8 |

Wenn sich die kegelstumpfförmige Hülle 1 (Fig.1a bzw. 3a) in einer Lage mit vertikaler Mittelachse A befindet, und die Laschen 5 radial nach aussen geklappt sind, dann können diese zumindest zum Teil am oberen Rand R der Hülle 1 z.B. mittels eines Klemmringes 7 an einem Haltering 8 des Gestells 6 festgelegt werden, worauf die Bedienperson oder auch eine Automatik die Hülle 1 befüllen kann. Im letzteren Fall sind dann mehrere solcher Gestelle 6 auf einer Transporteinrichtung, wie einem Drehteller unter dem Mundstück einer Zuführung für das/die Nahrungsmittel schrittweise vorbei bewegbar, bei denen die Hüllen 1 jeweils am Gestell 6 in der genannten oder jeder anderen Weise befestigt sind. Das Gestell 6 in Fig.1a ist nur ein Beispiel unter vielen anderen denkmöglichen Ausführungsformen.

Bei der Befüllung wird die Hülle 1 gespannt und hält - zusammen mit dem kegelstumpfförmigen Korb 19 - die eingefüllte Nahrungsmittelmasse unter seitlichem Druck, so dass ein kompakter Aufbau des Döner gesichert ist. Schliesslich aber werden die Laschen 5 zum Verschliessen der Hülle 1 samt dem eingefüllten Nahrungsmittel dienen, wie später an Hand der Fig.1b noch beschrieben wird. Der Klemmring 7 kann entweder nach Art eines Sprengringes mit einem Schlitz 9 versehen sein und/oder federnde Klauen 10 besitzen, die unter den Ring 8 des Gestells 6 federnd eingreifen. Selbstverständlich sind auch andere Befestigungsarten möglich.

Nach dem Befüllen der Hülle 1 muss der so erstellte Döner tiefgekühlt werden. Um dabei die Handhabung zu erleichtern und die Hygiene zu sichern, insbesondere aber die eingefüllte Masse von oben unter Druck zu setzen und letzte Luftblasen zu entfernen, ist es zweckmässig, das zuvor offene Ende O zu verschliessen. Auch hier könnten wiederum separate Verschlusskappen aufgesetzt und mit der Hülle verbunden werden. Um dabei aber zu vermeiden, dass ein scharfkantiger Rand des Döners am späteren Grill als erstes abbröckelt, müsste entweder der obere Rand des Korbes 19 wenigstens geringfügig nach innen gekrümmt sein, oder es ist bevorzugt, wenn die schon für das Verschliessen zweckdienlichen Laschen 5 auch zum Unter-Druck-Setzen verwendet werden. Zu diesem Zweck ist es vorteilhaft, wenn die Laschen eine radiale Erstreckung besitzen, welche im gegen die Mittelachse A hin geklappten Zustand erlaubt, die Laschen 5 an einem in der Mittelachse A angeordneten Spiess 15 zu befestigen und den oberen Querschnitt des Döners so abzudecken, dass er von Laschenflächen im Wesentlichen bedeckt ist.

Fig.1b veranschaulicht, wie das Verschliessen der Hülle 1 mittels der Laschen 5 vor sich gehen kann. Nachdem die Nahrungsmittelmasse in die Hülle 1 bis zur Höhe des Randes R eingefüllt worden ist, werden die Laschen 5 einzeln um den Rand R herum nach innen geklappt, wie dies an Hand der Laschen 5' gezeigt ist. Bevorzugt ist die Anzahl der Laschen eine gerade Zahl, so dass beispielsweise jeweils zwei einander gegenüberliegende Laschen 5 zusammengefügt werden können, und dann kreuzweise zwei andere einander gegenüberliegende Laschen. So können in dieser Weise erst einmal zwei Paare einander gegenüberliegender Laschen 5' miteinander verbunden werden, worauf man den Klemmring 7 löst und dann die allenfalls vorhandenen weiteren Laschen, vorzugsweise jeweils paarweise einander gegenüberliegend, schliesst. Die Gesamtzahl der Laschen ist mindestens 4, vorzugsweise 8 bis 12.

Zum sicheren Verschliessen und zum Aufbau eines Drucks, der das straff gespannte Hüllmaterial stabil halten soll, werden die Laschen bevorzugt über die Spitze 15a (Fig.3) des Spiesses 15 gezogen. Ausserdem wird dabei der obere Rand des Döner zwangsläufig abgerundet. Es mag bevorzugt (allerdings hier nicht dargestellt) sein, die Laschen 5 an der Stelle des späteren Spiesses 15 mit einer vorgestanzten Öffnung, gegebenenfalls sogar mit eingenieteter Öse, zu versehen.

Bei Versuchen hat sich herausgestellt, dass es noch günstiger wäre, hätte die Hülle 1 in Umfangsrichtung und in Längsrichtung (d.h. parallel zur ihrer Längsachse) unterschiedliche Dehnungseigenschaften. Der Grund dafür liegt darin, dass bei zu grosser Dehnbarkeit in Umfangsrichtung und einem schweren Döner die Tendenz besteht, dass die Nahrungsmittelmasse nach der Befüllung der Hülle 1 und deren Entnahme aus dem Korb 19 die Hülle 1 radial nach aussen drückt, die sich dadurch unzweckmässigerweise verformt, z.B. ausbaucht.

Um dies zu vermeiden, sind die Merkmale des Anspruches 1 vorgesehen. Die unterschiedliche Dehnbarkeit des Gewebes für die Hülle 1 kann beispielsweise durch die geeignete Wahl der unterschiedlichen Dehnbarkeiten der Kett- und Schussfäden bewerkstelligt werden, insbesondere wenn die Zuschnitte für die Hülle 1 auf der Gewebebahn entsprechend gelegt werden.

Gemäss Fig.2 ist eine Hülle 1 mit einem über eine Naht 21 angenähten Boden 20 in einem etwa kegelstumpfförmigen Korb 19 (dieser in einem Gestell 6 auf einem Ständer 17 bzw. einer Standplatte 18) - z.B. von einem hier nicht dargestellten Klemmring (7 in Fig.1a) an ihrem oberen Rand R - gehalten. Der Ständer 17 ist an sich von beliebiger Form und kann platten-, rad- oder ringförmig sein. Der Korb 19, z.B. aus einem Sieb oder Lochblech aus Metall oder Kunststoff, stützt die Hülle 1 ab und sichert dem fertigen Döner die gewünschte Form. Die Sieböffnungen bzw. Löcher dürfen allerdings nicht zu gross sein, da sich ansonsten das Material der Hülle 1 unter dem Druck der Befüllung in diese Öffnungen hinein ausbaucht und dort bei der späteren Tiefkühlung zu einem Gefrierbrand führt. Ausserdem kann dann die fertig befüllte Hülle nicht mehr leicht aus dem Korb 19 entfernt werden. Zweckmässig betragen die Lochdurchmesser unter 5 mm, insbesondere 2-3 mm, und die Lochabstände mindestens 5 mm, besser 10-15 mm.

Die Hülle 1 wird in Fig.2 in befülltem Zustand gezeigt. An ihrem Boden 20 liegt innen eine Scheibe 22 auf, in deren Mitte ein für den Rotationsantrieb beim Endkunden vorgesehenes vierkantiges Rohr 14 sitzt, das sich über die Höhe der Hülle 1 hinaus erstreckt. In diesem Rohr 14 steckt ein Spiess 15 mit einer Spitze 15a, über die nach der Befüllung die Laschen 5 gezogen werden, womit die Nahrungsmittelmasse unter Druck gesetzt wird.

Vor der Befüllung hat der Boden 20 einen gewissen Abstand von der Scheibe 22 (vgl. Fig.3a). Der Vierkantquerschnitt des Rohres 14 hat beispielsweise eine nur geringe Wandstärke von etwa 1-2 mm und eine Vierkant-Seitenlänge von 10-12mm. Der Spiess 15 ist hier im Zentrum der Standplatte 18 befestigt. Der fertige Döner wird mit der Scheibe 22 und dem Rohr 14 nach der Befüllung vom Spiess 15 abgezogen und geht zur Tiefkühlung.

Es wurde oben bereits erwähnt, dass die Hülle 1 zweckmässig eine gewisse Elastizität aufweisen wird. Wenn daher Nahrungsmittel in sie hineingefüllt wird, wird sich die Hülle 1 mehr oder minder nach unten hin dehnen, da sie am oberen Ende festgehalten ist. Der Kragen 23 ist in Fig.2 höhenverstellbar und mittels einer Klemmschraube 25 in jeder beliebigen Höhenposition festlegbar ausgebildet. Dabei ist der Abstand h1 der Oberseite des Kragens 23 zum Boden 20 der Hülle 1 danach bemessen, wie weit sich die Hülle 1 unter dem Gewicht der Nahrungsmittelmasse dehnen können soll.

Der Abstand h2 der Unterseite des Kragens 23 zur Standplatte 18 ist derjenige Abstand, der eine Höheneinstellung in Abhängigkeit von dem erwünschten Gewicht der Nahrungsmittelmasse gestattet. Denn Döner wird in sehr unterschiedlichen Grössen, beispielsweise von 15 kg bis 70 kg, hergestellt, so dass das Vorsehen des Abstandes h2 eine Einstellmöglichkeit auf die jeweils gefertigte Grösse ermöglicht.

Der Unterschied der Ausführung nach Fig.3 gegenüber derjenigen der Fig.2 besteht darin, dass die Scheibe 22 ausserhalb der Hülle 1 eingesetzt wird. Dies bietet den weiteren Vorteil, dass die Scheibe 22 samt dem Antriebsrohr 14 am Gestell 6 verbleibt, wenn die befüllte Hülle 1 aus dem Korb 19 gezogen und zur Tiefkühlung verbracht wird. Ausserdem vermeidet es die Reinigung und Rücksendung der Scheibe 22 mit dem Antriebsrohr 14 vom Endkunden zum Döner-Produzenten.

Im Rahmen der Erfindung sind zahlreiche Varianten möglich, die nicht vom erfinderischen Gedanken abweichen, zur Herstellung von Döner eine formgebende, sack- oder tütenförmige Hülle 1 zu verwenden, vorteilhaft zusammen mit wenigstens einem der Merkmale der Ansprüche 2 bis 5, und insbesondere unter gleichzeitiger Verwendung eines die Hülle 1 und den Korb 19 aufnehmenden und sie haltenden Gestelles 6.

Z.B. könnte am Rand des unteren Endes der Hülle ein Ring befestigt sein, auf dem die Scheibe 22 von innen aufsitzt, wodurch der vernähte Boden entfallen kann. Insbesondere können die Erfindungsgedanken des dehnbaren Gewebes und der Laschen zur Druckausübung theoretisch auch bei der Herstellung zylindrischer Döner-Formen Verwendung finden.

Unter dem Gewicht der Befüllung dehnt sich - wie Fig.3b zeigt - das in Längsrichtung stärker dehnbare Textilmaterial aus. Der Grad dieser Dehnung hängt einerseits vom Gewicht der Füllmasse, andererseits vom Textilmaterial ab; dem kann durch Höhenverstellung des Anschlags 23, z.B. mittels einer hier nicht dargestellten Klemmschraube 25 (Fig.2, 3c) Rechnung getragen werden. Erst durch die maximale Dehnung der Hülle1 bekommt die im Korb 19 erzielte Döner-Form ihre Stabilität, sodass nach dem Verschliessen mittels der Laschen 5 die befüllte Hülle aus dem Korb 19 entfernt und zur Tiefkühlung transportiert werden kann, ohne dass die Kegelstumpfform in eine störende Wellenform sackt.

Der Spiess 15 steht auf einer Standplatte 18 und ist mit dieser verbunden. Er kann gegebenenfalls ebenfalls vierkantig sein und einen nur geringfügig kleineren Aussenquerschnitt als der Innenquerschnitt des Rohres 14 aufweisen, damit während des Befüllens möglichst keine Nahrungsmittelstückchen in den Spalt zwischen dem Rohr 14 und dem Spiess 15 dringen können. Seine Länge ist vorzugsweise so bemessen, dass seine Spitze 15a über die Höhe des fertigen Döner hinausragt, wie dies die Fig.3a und b zeigen, damit an dieser Spitze 15a gegebenenfalls die Laschen 5 zum Verschliessen des oberen Endes O der Hülle 1 eingehängt werden können (Fig.1b).

In der Darstellung gemäss Fig.3a und 3b ist über das Antriebsrohr 14 noch eine Hülse 26, z.B. aus aluminium-kaschiertem Karton oder aus Kunststoff gestülpt, die bewirkt, dass die Scheibe 22 mit dem Rohr 14 am Gestell beim Döner-Produzenten verbleiben kann, wenn die mit der Nahrungsmittelmasse befüllte Hülle 1 verschlossen und in die Tiefkühlung verbracht wird. Es handelt sich dann um eine Einweg-"Verpackung", da nicht nur die Hülle 1 vor dem Grillen sondern auch die Hülse 26 nach dem Grillen entsorgt werden können, während in der Ausführungsform nach Fig.2 die Scheibe 22 mit dem Antriebsrohr 14 vom Endkunden wieder zum Döner-Produzenten zurückgeliefert und gereinigt werden müsste.

Die Standplatte 18 mit dem Spiess 15 kann entweder in das Gestell 6 eingesetzt sein, oder es kann der Spiess 15 - bzw. ein Spiessstück 15c (Fig.3c) - mit der Scheibe 22 verbunden sein.

Die Fig.3c zeigt ein Detail einer Variante der Fig.3a und b. Unter Verzicht auf ein Rohr 14 beim Döner-Produzenten steht die Hülse 26 direkt auf der Scheibe 22. Der Spiess 15 geht nicht über die ganze Länge durch, sondern ist in einen unteren, mit der Scheibe 22 verbundenen, kurzen Teil 15c, und in einen oberen, kurzen Teil 15b getrennt, der die Spitze 15a trägt. In diesem Fall kann die Spitze 15a so ausgebildet sein, dass ihre Basis das obere Ende der Hülse 26 überdeckt und damit das Eindringen von Nahrungsmittelteilen in die Hülse verhindert. Ausserdem schützt sie die obere Schnittkante der Hülse 26, was insbesondere zweckmässig sein mag, wenn diese aus aluminiumkaschierter Pappe besteht. Bevorzugt ist in einem solchen Fall noch die Abdeckung dieser Schnittkante durch eine Ringkappe 27 aus Metall oder Kunststoff.

Die Hülse 26 kann auch ein Vierkantprisma sein, wobei in diesem Fall auch die Metallringkappe 27 quadratisch ausgebildet ist, sodass das obere Ende der Hülse 26 für den Eingriff des Vierkantnippels des beim Endkunden vorgesehenen Antriebsmotors dienen kann. Andererseits genügt es, die Hülse 26 so zu dimensionieren, dass eine Scheibe 22 mit Rohr 14 beim Endkunden in die Hülse 26 straff sitzend eingeschoben werden kann. Es ist dann beim Endkunden nur eine ständig wiederverwendbare Scheibe 22 - mit Rohr 14 für den Antrieb - erforderlich.

Gegebenenfalls kann es, insbesondere unmittelbar im Anschluss an die Befüllung, günstig sein, von aussen ein Vakuum anzulegen, um zur Verdichtung beizutragen bzw. etwaige Hohlräume in der Nahrungsmittelmasse zusammenfallen zu lassen, indem das Gestell 6 bzw. der Korb 19 spätestens nach dem Befüllen in ein Gehäuse eingesetzt wird, das über Anschlüsse zur Vakuumierung verfügt.

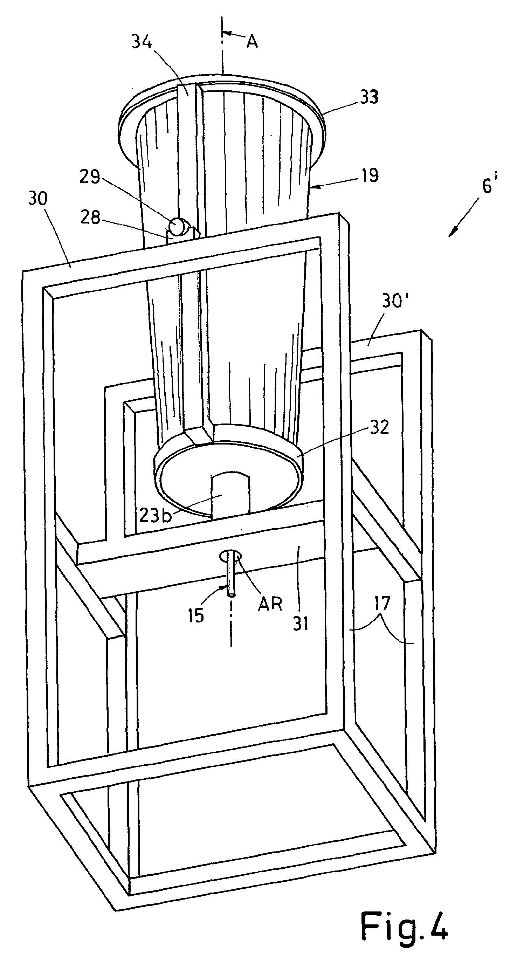

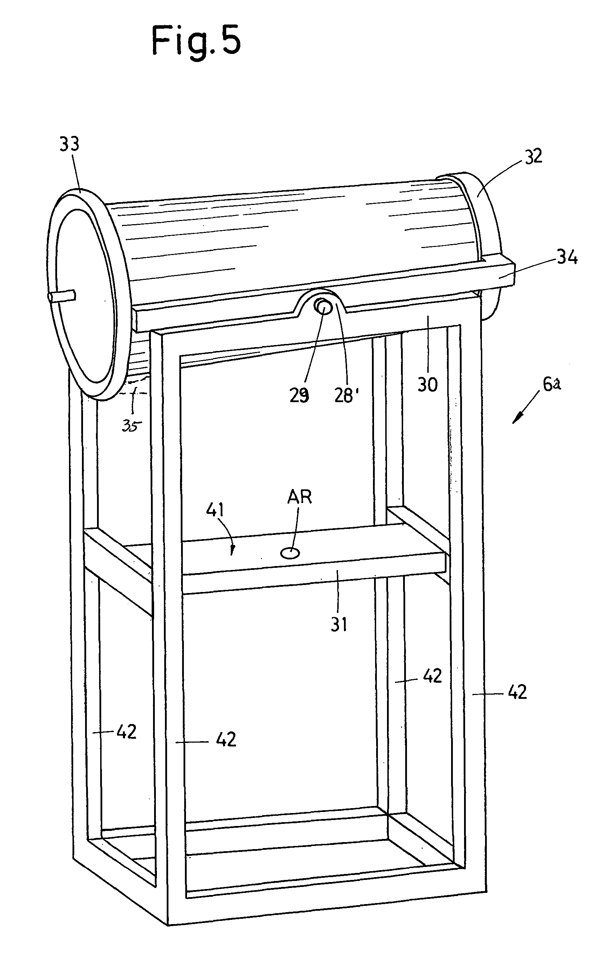

Das erfindungsgemässe Gestell kann noch dahingehend verbessert werden, dass die Handhabung der oft sehr schweren Fleischlaibe erleichtert wird. Dies gelingt durch die kennzeichnenden Merkmale des Anspruches 8, insbesondere in Verbindung mit den Merkmalen der von ihm abhängigen Ansprüche. Dazu sind z.B. gemäss den Fig. 4 und 5 an einem Gestell 6' bzw. 6a lösbare Mittel 15, 23b, AR; oder 50-52, vorgesehen, die den Korb 19 in vertikaler Befüllstellung fixieren und nach dem Lösen ein Kippen des Korbes 19 und/oder seine Absenkung zwecks erleichterter Entnahme der befüllten Hülle 1 ermöglichen.

Wenn man bedenkt, dass in die Hüllen bzw. in den Korb eine Menge von 15 bis 70 kg Fleisch eingefüllt wird, kann man sich vorstellen, welche Mühe die Handhabung dieser Menge kostet. Durch die erfindungsgemässe Anbringung von Achszapfen 29 an zwei einander gegenüberliegenden Seiten ist es möglich, den Korb 19 nach dem Befüllen zu kippen, so dass die Masse samt Hülle 1 waagrecht herausgezogen und beispielsweise auf einen Transportwagen oder auf ein - bevorzugt konkaven Querschnitt aufweisendes - Förderband abgelegt werden kann. Dazu weist das Gestell 6 je ein Lager 28 an einander gegenüberliegenden Seiten des Gestelles 6' auf.

Um die Achszapfen 29 ohne nennenswerte Belastung des Korbes 19 an diesem anbringen zu können, ist nach einer Weiterbildung der Erfindung vorgesehen, dass der Korb 19 an seinen beiden Endbereichen Verstärkungsringe 32, 33 aufweist, zwischen denen an einander gegenüberliegenden Seiten zwei Streben 34 verlaufen, an denen die Achszapfen 29 sitzen.

Eine Möglichkeit für das lösbare Fixieren eines kippbaren Korbes 19 in der vertikalen Befüllstellung ist in Fig.4 dargestellt. Das Gestell weist einen Querholm 31 mit einer mindestens in Mittelachsnähe befindlichen Stützfläche 41 mit mittiger Öffnung AR für den Spiess 15 auf, an der ein einen Anschlag bildender Stützring 23b haltbar ist. Dieser ist unterhalb des Korbes 19 einschiebbar und legt damit den um die Achszapfen 29 kippbaren Korb 19 fest bzw. ist er beim Entnehmen des Nahrungsmittels nach Herausziehen des Spiesses 15 wieder herausziehbar, um ein Kippen des Korbes 19 in eine Entnahmestellung, etwa nach Fig.5, zu ermöglichen.

Selbstverständlich sind auch andere Möglichkeiten denkbar, den Korb 19 in der Befüllstellung vertikal zu fixieren und nach dem Befüllen die Fixierung zu lösen, damit er gekippt werden kann. So ist z.B. statt des den Aufnahmeraum AR durchdringenden Spiesses 15 eine U-förmige Raste auf dem diesfalls wesentlich schmäler ausgebildeten Querholm 31 ohne die Öffnung AR möglich, wobei der auf dem Querholm 31 aufsitzende Spiess 15 in dem U dadurch gehalten wird, dass ein Stift die beiden U-Schenkel durchdringt, der dann zum Kippen des Korbes 19 gelöst wird.

Bei der Ausführung nach Fig.5 ist wenigstens an einer Seite an Stelle einer Lagerschale 28 ein bügelförmiges Lager 28' vorgesehen, das dafür sorgt, dass der darin hineingesteckte Achszapfen 29 nicht unbeabsichtigt (z.B. infolge einer einseitigen Befüllung) aus seinem Lager heraus kann. An der anderen, gegenüberliegenden Seite kann dagegen die schon beschriebene Lagerschale 28 (vgl. Fig.4) vorgesehen sein, so dass der Korb 19 beim Aufsetzen auf das Gestell 6' zuerst mit einem Lagerzapfen in die Öffnung des Bügellagers 28' eingeschoben und sodann der gegenüberliegende Lagerzapfen auf die Lagerschale an der gegenüberliegenden Seite aufgelegt wird. Selbstverständlich sind auch andere Konstruktionen, etwa mit gegen eine innere Feder zusammenschiebbaren Achszapfen, oder aufklappbare Lagerschalen denkbar.

Wie Fig.5 zeigt, liegt der Korb 19 in der Entnahmestellung so, dass die Strebe 34 des Korbes 19 und die Querstrebe 30 des Gestelles 6a annähernd parallel zueinander und horizontal liegen. Da aber der Korb 19 sich nach links (bezogen auf die Fig.5) erweitert, ist seine untere Fläche, auf der das Gewicht des Döners ruht, abschüssig, so dass die Entnahme ohne grossen Kraftaufwand erfolgen kann. Man kann aber gewünschtenfalls den Korb 19 auch weiter nach links absenken, um ein grösseres Gefälle (z.B. für ein grösseres Gewicht) zu erhalten. Um die jeweilige Entnahmelage und den Kippwinkel zu sichern, kann zwischen den beiden, einander gegenüberliegenden Querstreben 30 ein, gegebenenfalls höhenverstellbar angebrachter, strichliert angedeuteter Anschlagbügel 35 oder ein anderer Anschlag vorgesehen sein.

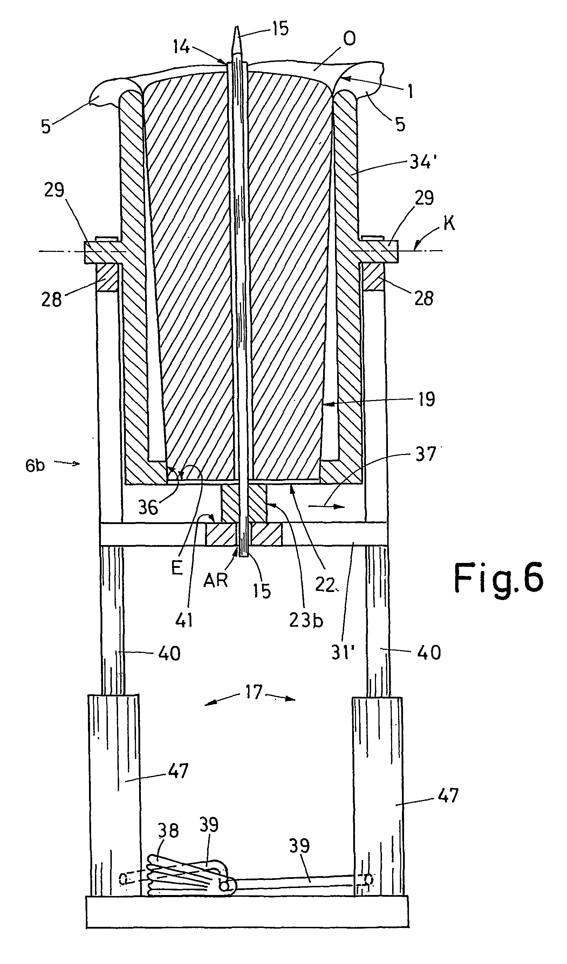

In Fig.6 ist die Hülle 1 in einen nur als Strich sichtbaren Korb 19 eingesetzt. Die Achszapfen 29 sind an einem den Korb 19 umgebenden Topf 34' (er hat die Funktion der Streben 34) angebracht, der den Korb 19 an der Unterseite in einer Öffnung 36 festhält. Der Querholm des Gestelles 6b ist hier als Plattform 31' ausgebildet und hat den mittigen Aufnahmeraum AR für den Spiess 15.

Die Fleischmasse wird beim Befüllen rund um das Rohr 14 angeordnet, das an der Scheibe 22 befestigt ist. Unter der Scheibe 22 ist der Stützring 23b eingeschoben, und zwar so knapp, dass der Korb 19 samt Topf 34' nicht kippen kann. Durch den Aufnahmeraum AR und die Zylinderöffnung des Stützringes 23b, sowie durch das Antriebsrohr 14 wird dann der Spiess 15 hindurchgeschoben.

Nach dem Befüllen wird der Spiess 15 herausgezogen, so dass man den Stützring 23b im Sinne des Pfeiles 37 unter dem Topf 34' bzw. dem Korb 19 seitlich herausziehen kann. Damit ist die Möglichkeit gegeben, den Korb 19 in eine der Fig. 5 entsprechende Entnahmelage zu kippen.

Zur Anpassung an die Grösse der befüllenden Bedienungsperson und/oder an die Höhe der Ladefläche eines Transportwagens ist es vorteilhaft, wenn das Gestell im Sinne von Anspruch 10 (siehe auch Fig. 6) eine Höhenverstelleinrichtung zum Einstellen der Höhe des Korbes aufweist. Diese kann verschiedene Form haben, beispielsweise als ein höhenverstellbarer Träger, bzw. als eine Stütze oder Plattform 31' zur Höhenverstellung der Lager ausgebildet sein.

Beim Befüllen liegt ja das obere Ende des Korbes 19 relativ weit oben. Andererseits mag es sein, dass eine Höhenverstellung mindestens der Kippachse K (Fig. 6) auch in einer Entnahmelage nach Fig. 5 von Vorteil ist, um die Öffnung des Korbes 19 auf das Niveau einer Ablagefläche oder der Ladefläche eines Transportwagens zu bringen. Natürlich sind zur Lösung dieses Problems zahlreiche Möglichkeiten im Rahmen der vorliegenden Erfindung gegeben. Beispielsweise kann die Plattform 31' an einer (nicht dargestellten) zentralen Spindel hochschraubbar sein.

Im vorliegenden Fall wurde die stabilere Lösung auf vier Beinen gewählt. Vorzugsweise werden die Beine des Gestelles 6b an der Unterseite als, z.B. pneumatische, Zylinder 47 mit Kolbenstangen 40 ausgebildet, die durch entsprechende, nicht dargestellte Ventile abgesperrt werden können (bzw. als steuerbare Rückschlagventile nur ein Einlassen von Luft erlauben, zum Herunterstellen der Plattform 31' aber geöffnet werden können), so dass die darin befindliche Luft nicht entweichen kann. Eine einfache Pumpe oder ein Tretbalg 38 versorgt die Zylinder 47 zentral mit Luft, so dass alle Zylinder über Schläuche 39 jeweils gleich viel Luft (oder eine Hydraulikflüssigkeit) erhalten. Auf diese Weise ist ein Heben und Absenken selbst während des Betriebes mit dem schweren Döner möglich.

Die Höhenverstellung kann auch in Stufen, z.B. mittels in Stecklöcher entlang von teleskopisch ineinander schiebbaren Beinen des Gestelles erfolgen, in welche Löcher an einer Stelle jeweils ein Stift gesteckt werden kann.

Im Rahmen der Erfindung sind zahlreiche Varianten möglich, die nicht von den erfinderischen Gedanken abweichen. Z.B. könnte am Rand des unteren Endes der Hülle ein Ring befestigt sein, auf dem die Scheibe 22 von innen aufsitzt, wodurch der vernähte Boden entfallen kann. Insbesondere können die Erfindungsgedanken des dehnbaren Gewebes und der Laschen zur Druckausübung theoretisch auch bei der Herstellung zylindrischer Döner-Formen Verwendung finden.

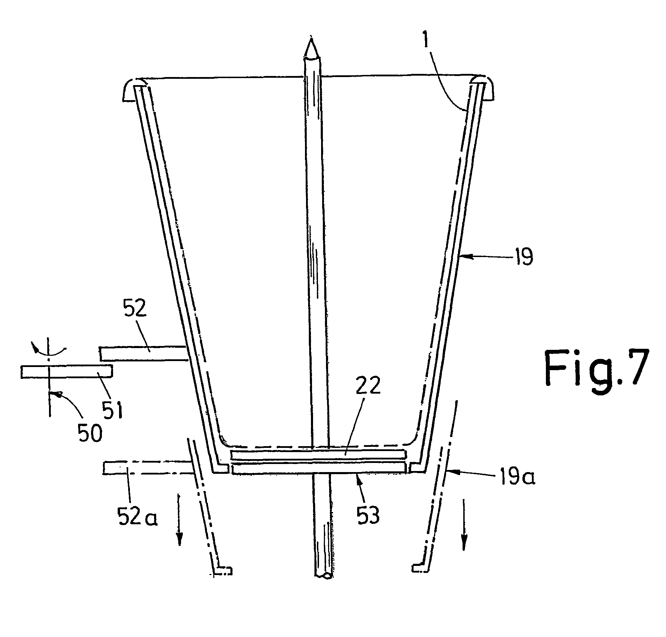

Eine andere Möglichkeit der erleichterten Entnahme ist in Fig. 7 dargestellt. Der Korb (19) wirkt mit einer Halteeinrichtung 50-52 zusammen, welche ihn in Befüllstellung hält. Nach dem Befüllen ist der Korb 19 aus der Befüllstellung nach unten hin abziehbar. Er kann aber auch einen unten offenen Boden aufweisen, durch welchen ein Halteplateau 53 für den Döner hindurchzutreten vermag.

Die Halteeinrichtung kann beispielsweise ein pneumatischer oder hydraulischer Zylinder sein, dessen Kolbenstange an mindestens einem, den korbseitigen Teil der Halteeinrichtung bildenden Fortsatz (zweckmässig sind es mindestens zwei an gegenüberliegenden Seiten) angreift. Alternativ kann es ein mechanisches Getriebe, etwa mit einer Zahnstange oder ein Hebelgetriebe, z.B. mit einer Ausknickung über einem Totpunkt, sein, welches den Korb 19 hält.

Die hier dargestellte Halteeinrichtung wird einfach von einem um eine Achse 50 schwenkbaren Sperrriegel 51 gebildet, der mit einem Fortsatz 52 des Korbes 19 zusammenwirkt und den Fortsatz unterstützt, wenn der Riegel 51 in Sperrstellung ist. Achse 50 und Riegel 51 können am Gestell 6 angeordnet sein. Natürlich sind auch ähnliche andere Ausführungsformen für die Halteeinrichtung denkbar.

Wird der Sperrriegel 51 gelöst, so kann der Korb 19 in die darunter strich-punktierte Stellung 19a abgesenkt werden, so dass er sich von der Hülle 1 und dem darin befindlichen fertigen Döner löst, der dann stehend abgenommen werden kann. Der fertig befüllte Döner steht dann z.B. auf einem Halteplateau 53.

Es versteht sich, dass es bei dieser Vorgangsweise nur auf eine Relativbewegung zwischen Korb 19 und Hülle 1 ankommt, d.h. dass nach einer alternativen Ausführungsform der Korb 19 in der mit vollen Linien dargestellten Lage verbleibt und das Plateau als eine Art beweglicher Stempel von einem Getriebe oder einem fluidischen, bevorzugt pneumatischen, Aggregat nach oben gedrückt wird. Diese Ausführung wäre aber nur dann bevorzugt, wenn dann der schwere Döner in einer relativ grossen Höhe von einer Automatik abgehoben wird, während er ansonsten schwerer zu handhaben wäre. Somit wird das Plateau 53 vorteilhaft ortsfest, z.B. am Gestell, gehalten.

## Patentansprüche

1. Hülle (1) für die Herstellung und Konditionierung von dönerartigen Formkörpern, wobei um eine Mittelachse (A) der Hülle (1) herum Nahrungsmittelstücke aufzubringen sind, wobei die Hülle (1) aus einem sack- oder tütenförmigen Teil besteht, der an seinem unteren Ende (E) im Wesentlichen verschlossen und am oberen Ende (O) zum Befüllen offen ist, wobei das untere Ende (E) einen geringeren Querschnitt besitzt als das obere Ende (O), **dadurch gekennzeichnet, dass** die Hülle (1) aus einem luftdurchlässigen Material, z.B. einem Textilmaterial, besteht, dessen Dehnbarkeit in Längsrichtung grösser als in Umfangsrichtung ist.

2. Hülle nach Anspruch 1, **dadurch gekennzeichnet, dass** die Dehnbarkeit in Längsrichtung das 4- bis 8-fache derjenigen in Umfangsrichtung beträgt, wobei die Hülle (1) in Längsrichtung eine elastische Dehnung von vorzugsweise etwa 10 bis 14%, insbesondere um 12 %, aufweist, in Umfangsrichtung hingegen unter 4%, beispielsweise etwa 2% aufweist.

3. Hülle nach Anspruch 1 oder 2, **dadurch gekennzeichnet, dass** am offenen Ende (O) eine Anzahl von Laschen, insbesondere mindestens vier, bevorzugt 8 bis 12 Laschen (5), von dem das Ende (O) begrenzenden Rand (R) der Hülle (1) herum klappbar abstehen, wobei die Dimensionierung der Laschen (5) vorzugsweise ermöglicht, die Laschen (5) nach dem Befüllen der Hülle (1) mit Nahrungsmittel über die Spitze (15a) eines in der Mittelachse (A) angeordneten Spiesses (15) zu ziehen bzw. an ihr einzuhängen und das obere Ende (O) der Befüllung vollständig zu überdecken.

4. Gestell mit einer darin aufgenommenen sack- oder tütenförmigen Hülle (1), die am unteren Ende (E) im Wesentlichen verschlossen und am oberen Ende (O) zum Befüllen offen ist, wobei das untere Ende (E) einen geringeren Querschnitt besitzt als das obere Ende (O), für die Herstellung und Konditionierung von dönerartigen Formkörpern, wobei um eine Mittelachse (A) der Hülle (1) herum Nahrungsmittelstücke aufzubringen sind, **dadurch gekennzeichnet, dass** die Hülle (1) aus einem luftdurchlässigen Material, z.B. einem Textilmaterial, besteht, dessen Dehnbarkeit in Längsrichtung grösser als in Umfangsrichtung ist, und das Gestelleinen kegelstumpfförmigen Korb (19), z.B. aus einem Sieb- oder Lochblechmaterial mit einem Lochdurchmesser unter 5 mm, insbesondere 2-3 mm, und Lochabständen von mindestens 5 mm, besser 10-15 mm, umfasst, in dem die die Hülle (1) eingesetz ist.

5. Gestell nach Anspruch 4, **dadurch gekennzeichnet, dass** der Korb (19) in einem Gestell (6) aufgenommen und gehalten ist, das einen Ständer (17) aufweist, in dessen im wesentlichen vertikaler Mittelachse (A) ein Spiess (15) oder Spiessteil (15c) zur Ein- bzw. Durchführung in bzw. durch ein - vorzugsweise vierkantiges - an einer Bodenscheibe (22) befestigtes Antriebsrohr (14) und gegebenenfalls eine Hülse (26) vorgesehen ist, wobei vorzugsweise am Spiess (15) oder einem unteren Spiessteil (15c) in einem Abstand von einer Standplatte (18) ein - insbesondere höhenverstellbarer - Anschlag (23) vorgesehen ist.

6. Gestell nach Anspruch 5, **dadurch gekennzeichnet, dass** die Scheibe (22) ausserhalb der Hülle (1) liegt und der Spiess (15) oder Spiessteil (15c) den Boden (20) der Hülle (1) durchdringt.

7. Gestell nach einem der Ansprüche 4 bis 6, **dadurch gekennzeichnet, dass** Mittel, z.B. ein Spannring (7), am oberen Ende des Korbes (19), zum Fixieren der Hülle (1) und gegebenenfalls wenigstens eines Teiles der Laschen (5) am Rand (R) der Hülle (1) während des Befüllvorganges vorgesehen sind.

8. Gestell nach einem der Ansprüche 4 bis 7, **dadurch gekennzeichnet, dass** lösbare Mittel (15,23b,AR; 50-52) vorgesehen sind, die den Korb (19) in vertikaler Befüllstellung fixieren und nach dem Lösen zwecks erleichterter Entnahme der befüllten Hülle (1) ermöglichen, insbesondere durch ein Kippen des Korbes (19) und/oder eine vertikale Relativbewegung des Korbes (19) gegenüber der befüllten Hülle (1), durch Absenken des Korbes (19) und/oder Anheben der befüllten Hülle (1).

9. Gestell nach Anspruch 8, **dadurch gekennzeichnet, dass** der Korb (19) an zwei einander gegenüberliegenden Seiten je einen Achszapfen (29) aufweist, welche Achszapfen (29) in je ein Lager (28; 28') an einander gegenüberliegenden Seiten des Gestelles (6) einsetzbar sind, und dass vorzugsweise der Korb (19) an seinen beiden Endbereichen Verstärkungsringe (32, 33) aufweist, zwischen denen an einander gegenüberliegenden Seiten zwei Streben (34) verlaufen, an denen die Achszapfen (29) vorgesehen sind.

10. Gestell nach einem der Ansprüche 4 bis 9, **dadurch gekennzeichnet, dass** sie eine Höhenverstelleinrichtung (38-40,47) zum Einstellen der Höhe des Korbes (19), insbesondere Ständer oder Beine (40; 42, 47) aufweist, deren effektive Höhe und damit auch die Höhe der Lager (28; 28') verstellbar ist.

11. Verfahren zur Herstellung von dönerartigen Formkörpern mit einer Hülle (1) nach einem der Ansprüche 1 bis 3 und mit einem Gestell nach einem der Ansprüche 4 bis 10, **dadurch gekennzeichnet, dass** nach dem Befüllen der Hülle (1) die eingefüllten Nahrungsmittelstücke von oben mittels der an dem zentralen Spiess (15, 15a) einzuhängenden Laschen (5) und/oder von unten durch Annäherung des unteren Endes (E) der Hülle (1) an die Scheibe (22) unter Druck gesetzt werden.

## Claims

1. A casing (1) for producing and conditioning döner-like bodies, wherein pieces of food are to be applied around a central axis (A) of the casing (1), wherein the casing (1) consists of a sack- or bag-shaped part, which is substantially closed on its bottom end (E) and which is open on the top end (O) for filling purposes, wherein the bottom end (E) has a smaller cross section than the top end (O),
**characterized in that**
the casing (1) consists of an air-permeable material, e.g. a textile material, the elasticity of which is larger in longitudinal direction than in circumferential direction.

2. The casing according to claim 1,
**characterized in that**
the elasticity in longitudinal direction is 4-times to 8-times the elasticity in circumferential direction, wherein the casing (1) preferably has an elastic stretch of between 10 and 14%, in particular around 12% in longitudinal direction, whereas it has less than 4%, for example approximately 2% in circumferential direction.

3. The casing according to claim 1 or 2,
**characterized in that**
a number of tabs, in particular at least four, preferably between 8 and 12 tabs (5), which can be folded around the edge (R) of the casing (1), which bounds the end (O), project away from the open end (O), wherein the dimensioning of the tabs (5) preferably makes it possible to pull the tabs (5) across the tip (15a) of a spit (15), which is arranged in the central axis (A), or to hinge them to said spit, respectively, and to completely cover the top end (O) of the filling after filling the casing (1) with food.

4. A rack comprising a sack- or bag-shaped casing (1) accommodated therein, which is substantially closed on the bottom end (E) and which is open on the top end (O) for filling purposes, wherein the bottom end (E) has a smaller cross section than the top end (O), for producing and conditioning döner-like bodies, wherein pieces of food are to be applied around a central axis (A) of the casing (1),
**characterized in that**
the casing (1) consists of an air-permeable material, e.g. a textile material, the elasticity of which is larger in longitudinal direction than in circumferential direction, and the rack comprises a truncated cone-shaped basket (19), e.g. of a perforated plate material or of a punched plate material, comprising a hole diameter of less than 5 mm, in particular 2-3 mm, and hole distances of at least 5 mm, preferably 10-15 mm, into which the casing (1) is inserted.

5. The rack according to claim 4,
**characterized in that**
the basket (19) is accommodated and held in a rack (6), which has a stand (17), in the substantially vertical central axis (A) of which provision is made for a spit (15) or spit part (15c) for guiding into or guiding through, respectively, a - preferably square - drive pipe (14), which is fastened to a ground disk (22) and a sleeve (26), if applicable, wherein provision is preferably made on the spit (15) or on a lower spit part (15c) at a distance from a stand plate (18) for an - in particular height-adjustable - stop (23).

6. The rack according to claim 5,
**characterized in that**
the disk (22) is located outside of the casing (1) and the spit (15) or spit part (15c) penetrates through the bottom (20) of the casing (1).

7. The rack according to any one of claims 4 to 6,
**characterized in that**
provision is made on the top end of the basket (19) for means, e.g. a clamping ring (7), for fixing the casing (1) and at least a part of the tabs (5), if applicable, to the edge (R) of the casing (1) during the filling process.

8. The rack according to any one of claims 4 to 7,
**characterized in that**
provision is made for releasable means (15, 23b, AR; 50-52), which fix the basket (19) in vertical filling position and which, after the release, facilitates the removal of the filled casing (1), in particular by tilting the basket (19) and/or a vertical relative movement of the basket (19) relative to the filled casing (1), by lowering the basket (19) and/or lifting the filled casing (1).

9. The rack according to claim 8,
**characterized in that**
the basket (19) in each case has an axle journal (29) on two opposite sides, which axle journals (29) can in each case be inserted into a bearing (28; 28') on opposite sides of the rack (6) and that the basket (19), on its two end areas, preferably has reinforcing rings (32, 33), between which, on opposite sides, two rods (34) run on, on which provision is made for the axle journals (29).

10. The rack according to any one of claims 4 to 9,
**characterized in that**
it has a height-adjusting device (38-40, 47) for adjusting the height of the basket (19), in particular stands or legs (40; 42, 47), the effective height of which and thus also the height of the bearings (28; 28') can be adjusted.

11. A method for producing döner-like bodies comprising a casing (1) according to any one of claims 1 to 3 and comprising a rack according to any one of claims 4 to 10,
**characterized in that,**
after filling the casing (1), the pieces of food, which have been filled in, are pressurized from the top by means of tabs (5), which are to be hinged to the central spit (15, 15a), and/or from the bottom by bringing the bottom end (E) of the casing (1) closer to the disk (22).

## Revendications

1. Housse (1) pour la fabrication et le conditionnement de corps en forme de kebab, sachant que des morceaux d'aliments doivent être appliqués autour d'un axe médian (A) de la housse (1), sachant que la housse (1) est composée d'une partie en forme de sac ou de sachet qui est essentiellement fermée à son extrémité inférieure (E) et ouverte à son extrémité supérieure (O) pour le remplissage, sachant que l'extrémité inférieure (E) présente une coupe transversale plus petite que l'extrémité supérieure (O),
**caractérisée en ce que**
la housse (1) est composée d'un matériau laissant passer l'air, par exemple un matériau textile, dont l'extensibilité est plus grande dans le sens longitudinal que dans le sens périphérique.

2. Housse selon la revendication 1,
**caractérisée en ce que**
l'extensibilité dans le sens longitudinal fait 4 à 8 fois celle dans le sens périphérique, sachant que la housse (1) présente une dilatation élastique de préférence d'environ 10 à 14 %, en particulier de 12 % dans le sens longitudinal, mais présente une dilatation élastique inférieure à 4 %, par exemple d'environ 2 % dans le sens périphérique.

3. Housse selon la revendication 1 ou 2,
**caractérisée en ce que**
sur l'extrémité ouverte (O), plusieurs brides, en particulier au moins quatre, de préférence 8 à 12 brides (5) sont en saillie du bord (R) de la housse (1) délimitant l'extrémité (O) en pouvant être rabattues tout autour, sachant que le dimensionnement des brides (5) permet de préférence, après le remplissage de la housse (1) avec des aliments, de tirer les brides (5) sur la pointe (15a) d'une broche (15) disposée dans l'axe médian (A), respectivement, de les suspendre sur celle-ci et de recouvrir entièrement l'extrémité supérieure (O) du remplissage.

4. Support comprenant une housse (1) en forme de sac ou de sachet reçue dessus, qui est essentiellement fermée à son extrémité inférieure (E) et est ouverte à son extrémité supérieure (O) pour le remplissage, sachant que l'extrémité inférieure (E) présente une section plus faible que l'extrémité supérieure (O), pour la fabrication et le conditionnement de corps en forme de kebab; sachant que des morceaux d'aliments doivent être appliqués autour d'un axe médian (A) de la housse (1),
**caractérisé en ce que**
la housse (1) est composée d'un matériau laissant passer l'air, par exemple un matériau textile, dont l'extensibilité est plus grande dans le sens longitudinal que dans le sens périphérique, et le support comprend un panier tronconique (19), par exemple dans un matériau de tôle de tamis ou perforée avec un diamètre de trou inférieur à 5 mm, en particulier de 2 - 3 mm, et des écarts entre les trous d'au moins 5 mm, mieux de 10 - 15 mm, dans lequel la housse (1) est insérée.

5. Support selon la revendication 4,
**caractérisé en ce que**
le panier (19) est reçu et tenu dans un support (6) qui présente un pied (17), dans l'axe médian essentiellement vertical (A) duquel est prévue une broche (15) ou partie de broche (15c) pour pénétrer dans, respectivement, traverser un tube d'entraînement (14), de préférence carré, fixé sur une rondelle de fond (22), et le cas échéant une douille (26) est prévue, sachant que de préférence, une butée (23) en particulier à hauteur réglable est prévue sur la broche (15) ou une partie inférieure de broche (15c) à distance d'un plateau (18).

6. Support selon la revendication 5,
**caractérisé en ce que**
la rondelle (22) repose en-dehors de la housse (1) et la broche (15) ou partie de broche (15c) traverse le fond (20) de la housse (1).

7. Support selon l'une des revendications 4 à 6,
**caractérisé en ce que**
des moyens, par ex. un anneau de serrage (7), sont prévus sur l'extrémité supérieure du panier (19) pour fixer la housse (1), et le cas échéant au moins une partie des brides (5) sont prévues sur le bord (R) de la housse (1) pendant le remplissage.

8. Support selon l'une des revendications 4 à 7,
**caractérisé en ce que**
des moyens amovibles (15, 23b, AR ; 50-52) sont prévus qui fixent le panier (19) en position verticale de remplissage et après la séparation, permettent le prélèvement facilité de la housse (1) remplie, en particulier par une bascule du panier (19) et/ou un mouvement relatif vertical du panier (19) par rapport à la housse (1) remplie, par l'abaissement du panier (19) et/ou le soulèvement de la housse (1) remplie.

9. Support selon la revendication 8,
**caractérisé en ce que**
le panier (19) présente un pivot d'arbre (29) respectif sur deux côtés faces l'un à l'autre, lesquels pivots d'arbre (29) peuvent être insérés dans un palier (28 ; 28') respectif sur des côtés du support (6) faces l'un à l'autre, et que de préférence, le panier (19) présente des anneaux de renfort (32, 33) sur ses deux extrémités, entre lesquels passent deux branches (34) sur des côtés faces l'un à l'autre, sur lesquelles les pivots d'axe (29) sont prévus.

10. Support selon l'une des revendications 4 à 9,
**caractérisé en ce qu'il**
présente un dispositif de réglage en hauteur (38-40, 47) pour régler la hauteur du panier (19), en particulier des montants ou des pieds (40 ; 42, 47) dont la hauteur effective et donc la hauteur des paliers (28 ; 28') est réglable.

11. Procédé de fabrication de corps en forme de kebab avec une housse (1) selon l'une des revendications 1 à 3 et avec un support selon l'une des revendications 4 à 10,
**caractérisé en ce qu'après**
le remplissage de la housse (1), les morceaux d'aliments remplis sont comprimés par le haut au moyen des brides (5) à suspendre sur la broche centrale (15, 15a) et/ou par lé bas par rapprochement de l'extrémité inférieure (E) de la housse (1) sur la rondelle (22).
